# EUROPEAN PATENT APPLICATION

(11) **EP 4 495 496 A1**
(43) Date of publication of application: **22.01.2025**
(21) Application number: 23795465.6
(22) Date of filing: 26.04.2023
(51) Int. Cl.: F24F 13/00, B60H 1/00

(54) **THERMAL MANAGEMENT COMPONENT AND SYSTEM, AND VEHICLE**

(30) Priority: 29.04.2022 CN 202210474513
(71) Applicant: Shenzhen Yinwang Intelligent Technologies Co., Ltd., Shenzhen, Guangdong 518129 (CN)
(72) Inventor: WANG, Lei, Shenzhen, Guangdong 518129 (CN); WENG, Jian, Shenzhen, Guangdong 518129 (CN); ZHU, Xiaoyong, Shenzhen, Guangdong 518129 (CN); ZHANG, Wanshan, Shenzhen, Guangdong 518129 (CN); SHAO, Jiayi, Shenzhen, Guangdong 518129 (CN)
(74) Representative: Pfenning, Meinig & Partner mbB
(86) International application number: PCT/CN2023/090818
(87) International publication number: WO 2023/208033

(57) **Abstract**

A thermal management component is provided, including a first substrate (111) and a second substrate (112). The first substrate (111) is provided with at least seven interfaces. The first substrate (111) is provided with at least seven flow channels. The at least seven flow channels communicate with the at least seven interfaces. The first substrate (111) is provided with a control valve. The control valve is configured to control communication between the at least seven flow channels to control communication between the at least seven interfaces. The second substrate (112) is disposed on a first side of the first substrate (111). The second substrate (112) is provided with through holes corresponding to the interfaces disposed on the first side of the first substrate (111). The interfaces disposed on the first side of the first substrate (111) respectively pass through the corresponding through holes. A thermal management system and a vehicle are further disclosed. According to the thermal management component, layout design complexity of a water pipe can be simplified, utilization of heat dissipation space of a plate heat exchanger can be improved, and space occupied by the thermal management system can be effectively reduced.

## Description

This application claims priority to Chinese Patent Application No. 202210474513.0, filed with the China National Intellectual Property Administration on April 29, 2022 and entitled "THERMAL MANAGEMENT COMPONENT AND SYSTEM, AND VEHICLE", which is incorporated herein by reference in its entirety.

### TECHNICAL FIELD

This application relates to the field of thermal management technologies, and specifically, to a thermal management component and system, and a vehicle.

### BACKGROUND

Thermal management of an entire electric vehicle is extremely complex. In addition to a front-end module and a heating, ventilation, and air conditioning (heating, ventilation, and air conditioning, HVAC) assembly, a thermal management system needs a large quantity of water pumps and water valves to drive and switch water paths. In addition, to improve a coefficient of performance (coefficient of performance, COP), a design of thermal management and thermal energy recovery needs to be implemented for a passenger compartment loop, an electric drive system loop, and a battery loop. If a conventional arrangement solution in which components are scattered is used, a drive component of a thermal management center is mainly located in a front compartment, the front compartment occupies large space, and there are too many pipe parts. Consequently, production efficiency and assembly efficiency are low, and it is difficult to implement quality management and control. This greatly affects the production efficiency and the assembly efficiency and causes a potential risk in production quality.

In view of this, a thermal management component and system, and a vehicle that can implement comprehensive thermal management on the passenger compartment loop, the electric drive system loop, and the battery loop, reduce space occupied by the thermal management system, and improve the assembly efficiency need to be urgently developed.

### SUMMARY

This application provides a thermal management component and system, and a vehicle. According to the thermal management component, a coolant flow channel is integrated into a substrate, to replace a water pipe, so that layout design complexity of the water pipe can be simplified, waste of residual heat of a redundant pipe can be avoided, and space occupied by the thermal management system can be reduced. In this way, assembly efficiency of the thermal management system and assembly efficiency of the vehicle are improved.

According to a first aspect, a thermal management component is provided. The thermal management component includes a first substrate and a second substrate. The first substrate is provided with at least seven interfaces. The first substrate is provided with at least seven flow channels. The at least seven flow channels communicate with the at least seven interfaces. The first substrate is provided with a control valve. The control valve is configured to control communication between the at least seven flow channels to control communication between the at least seven interfaces. The second substrate is disposed on a first side of the first substrate. The second substrate is provided with through holes corresponding to the interfaces disposed on the first side of the first substrate. The interfaces disposed on the first side of the first substrate respectively pass through the corresponding through holes.

In some possible implementations, a specific disposition manner of the at least seven interfaces includes but is not limited to: The first side of the first substrate is provided with the seven interfaces, and a second side of the first substrate is provided with no interface, or the first side of the first substrate is provided with no interface, and the second side of the first substrate is provided with the seven interfaces, or the first side of the first substrate is provided with n interfaces, and the second side of the first substrate is provided with (7-n) interfaces, where n is a positive integer greater than or equal to 1. When the first substrate is provided with more than seven interfaces in total, the interfaces may still be disposed in the foregoing allocation manner.

It should be understood that positions of the interfaces on the first substrate are not specifically limited in this application. Specific forms of the at least seven flow channels are not specifically limited in this application.

In some possible implementations, the control valve may be a multi-way valve, including but not limited to a four-way valve, a five-way valve, a six-way valve, a seven-way valve, an eight-way valve, and a nine-way valve.

In some possible implementations, the thermal management component is provided with one or more control valves, and the one or more control valves may be dispersedly arranged on the first side or the second side of the first substrate. It should be understood that the second side of the first substrate is a side away from the second substrate.

In the foregoing technical solution, a coolant flow channel is integrated into a substrate, to replace a water pipe, so that layout design complexity of the water pipe in a thermal management scenario can be simplified, and space occupied by the thermal management component can be reduced. This helps improve volume utilization of a front compartment of a vehicle. In addition, centralized arrangement of coolant flow channels can further prevent waste of residual heat in a thermal management loop caused by an excessively long water pipe. This helps improve a thermal energy recovery rate. Further, the first substrate and the second substrate are arranged in an integrated manner, so that utilization of heat dissipation space of a plate heat exchanger can be improved, and space occupied by a thermal management system can be effectively reduced. The one or more control valves are disposed on the first substrate, so that a direction of coolant in a flow channel of the thermal management component can be controlled by using the control valve, to control flexible switching between a plurality of thermal management modes of the thermal management system. The thermal management component supports residual heat recovery of a motor, residual heat recovery of a compressor, and the like. This helps flexibly control a thermal management loop of a battery, a thermal management loop of a passenger compartment, and a thermal management loop of an electric drive system, to implement the plurality of thermal management modes.

With reference to the first aspect, in some implementations of the first aspect, the at least seven interfaces include a first interface to a seventh interface. The first interface and the second interface are configured to connect to a thermal management loop of a passenger compartment. The third interface and the fourth interface are configured to connect to a thermal management loop of a battery. The fifth interface and the sixth interface are configured to connect to a thermal management loop of an electric drive system. The seventh interface is configured to connect to a coolant tank. The coolant tank is configured to fill or compensate coolant for a thermal management system. The thermal management system includes the thermal management loop of the passenger compartment, the thermal management loop of the battery, and the thermal management loop of the electric drive system.

The thermal management loop of the passenger compartment includes but is not limited to a compressor, a condenser, and a battery chiller, or may further include a PTC, a plate heat exchanger HEX, and the like. The thermal management loop of the battery includes but is not limited to a battery module. A battery in the battery module may include one or more of a lead-acid battery, a nickel-metal hydride battery, a nickel-chromium battery, and a lithium battery. The thermal management loop of the electric drive system includes an electric drive module. The electric drive module may include at least one of the following: a high-voltage power distribution unit (power distribution unit, PDU), a motor control unit (motor control unit, MCU), and a motor (motor). In some possible implementations, the thermal management loop of the electric drive system further includes a radiator of a front-end module.

With reference to the first aspect, in some implementations of the first aspect, the interfaces disposed on the first side of the first substrate include an eighth interface and a ninth interface. The eighth interface and the ninth interface respectively pass through corresponding through holes to be connected to a first thermal management device. The first thermal management device is one of a condenser and a battery chiller.

With reference to the first aspect, in some implementations of the first aspect, the interfaces disposed on the first side of the first substrate further include a tenth interface and an eleventh interface. The tenth interface and the eleventh interface respectively pass through corresponding through holes to be connected to a second thermal management device. The second thermal management device is a device other than the first thermal management device in the condenser and the battery chiller.

In the foregoing technical solution, the interfaces configured to connect to the first thermal management device and/or the second thermal management device are disposed on the other side of the first substrate, so that at least one of the condenser and the battery chiller can be mounted on the first substrate in a stacking manner. This helps reduce space occupied by the thermal management component, and helps improve assembly efficiency.

With reference to the first aspect, in some implementations of the first aspect, a cavity for storing a refrigerant is further provided inside the second substrate.

Specifically, the cavity for storing the refrigerant may be obtained through forging, die casting, or the like. The cavity is provided inside the second substrate, so that a refrigerant storage capacity can be further expanded, and space utilization can be maximized.

With reference to the first aspect, in some implementations of the first aspect, a first side of the second substrate is provided with a refrigerant container interface. The refrigerant container interface is configured to connect to a refrigerant container. The refrigerant container is stacked on the first side of the second substrate. The first side of the second substrate is a side away from the first substrate.

The refrigerant container may be a liquid storage tank, or may be another container for storing the refrigerant. This is not specifically limited in this application.

In some possible implementations, the refrigerant container is plate-shaped or cuboid-shaped, so that the refrigerant container is mounted on the second substrate in a stacking manner.

In the current technical background, a projection area that is of the refrigerant container and that is on a refrigerant substrate is limited. Consequently, a volume of the refrigerant container cannot be increased. In the foregoing technical solution, a height of the refrigerant container is increased, so that a requirement for increasing the volume of the refrigerant container can be met without increasing an area occupied by the refrigerant container. In this way, long-term evolution of the volume of the refrigerant container can be implemented. This helps resolve a problem that the thermal management system does not occupy an enough area to support expansion of the volume of the refrigerant container.

With reference to the first aspect, in some implementations of the first aspect, the thermal management component further includes: a first profile bracket and a second profile bracket, configured to mount the first thermal management device or the second thermal management device above the refrigerant container in a stacking manner.

When the volume of the refrigerant container needs to be increased or decreased, only the height of the refrigerant container may be adjusted, so that heights of the profile brackets mounted on two sides of the refrigerant container are adjusted, to control a mounting position of the first thermal management device or the second thermal management device.

In the foregoing technical solution, the first substrate, the second substrate, the refrigerant container, the first thermal management device, and the second thermal management device are mounted in a stacking manner. This helps reduce space occupied by the thermal management component and/or the thermal management device. Further, the thermal management components are integrated into the first substrate. This helps simplify an assembly process and reduce assembly difficulty. The thermal management components are assembled in a building-block manner, so that assembly efficiency of the entire vehicle can be effectively improved.

With reference to the first aspect, in some implementations of the first aspect, the control valve is disposed on a second side of the first substrate, and the second side of the first substrate is a side away from the second substrate.

With reference to the first aspect, in some implementations of the first aspect, the first side of the first substrate is provided with one or more water pump interfaces. The one or more water pump interfaces are configured to mount a water pump. The water pump is configured to control circulation of coolant in the thermal management system. In some possible implementations, the thermal management component may include one water pump interface, configured to mount a water pump. The water pump may be a water pump in any thermal management loop in the thermal management system. Alternatively, the thermal management component may include three water pump interfaces, to integrate water pumps in the thermal management loop of the passenger compartment, the thermal management loop of the battery, and the thermal management loop of the electric drive system into the thermal management component. Alternatively, the thermal management component may include another quantity of water pump interfaces.

In the foregoing technical solution, the water pump is integrated into the first substrate. This helps further improve assembly efficiency of the thermal management system. In addition, the water pump and the control valve are integrated into a side that is away from the second substrate. This facilitates management and maintenance of the thermal management component.

In some possible implementations, one or more water pumps and one or more control valves may be disposed between the first substrate and the second substrate.

With reference to the first aspect, in some implementations of the first aspect, the coolant substrate includes a first sub-substrate, a second sub-substrate, and a third sub-substrate. The third sub-substrate is disposed between the first sub-substrate and the second sub-substrate. An inner side of the first sub-substrate is provided with N half-flow channels, an inner side of the second sub-substrate is provided with M half-flow channels, one side of the third sub-substrate is provided with N half-flow channels corresponding to the inner side of the first sub-substrate, and the other side of the third sub-substrate is provided with M half-flow channels corresponding to the inner side of the second sub-substrate, to form the at least seven flow channels, where M and N are positive integers greater than or equal to 1.

It should be noted that the "inner side" of the first sub-substrate and the "inner side" of the second sub-substrate are sides that are connected to the third sub-substrate, and an "outer side" of the first sub-substrate and an "outer side" of the second sub-substrate are sides that are connected to an external device. The outer side of the first sub-substrate and the outer side of the second sub-substrate are respectively two sides of the first substrate.

It should be understood that, that one side of the third sub-substrate is provided with N half-flow channels corresponding to the inner side of the first sub-substrate means that after the first sub-substrate and the third sub-substrate are spliced, the N half-flow channels on the side of the third sub-substrate and the N half-flow channels on the inner side of the first sub-substrate may be spliced into N complete flow channels. That the other side of the third sub-substrate is provided with M half-flow channels corresponding to the inner side of the second sub-substrate means that after the second sub-substrate and the third sub-substrate are spliced, the M half-flow channels on the other side of the third sub-substrate and the M half-flow channels on the inner side of the second sub-substrate may be spliced into M complete flow channels. The first sub-substrate, the second sub-substrate, and the third sub-substrate form the first substrate.

In some possible implementations, a plurality of third sub-substrates may be further included between the first sub-substrate and the second sub-substrate. For example, two third sub-substrates are included, to increase flow channel integration of the first substrate.

In the foregoing technical solution, a coolant flow channel is integrated into a substrate, to replace a water pipe, so that layout design complexity of the water pipe in a thermal management scenario can be simplified. The third sub-substrate is added, so that flow channel integration of a coolant substrate can be improved.

With reference to the first aspect, in some implementations of the first aspect, the first substrate is a coolant substrate, and the at least seven flow channels are configured for circulation of the coolant. The second substrate is a refrigerant substrate, and a flow channel configured for circulation of the refrigerant is disposed inside the refrigerant substrate.

With reference to the first aspect, in some implementations of the first aspect, the first substrate is further provided with a temperature sensor interface, configured to connect to a temperature sensor. The temperature sensor is configured to detect a temperature of the coolant, so that a control module can adjust a working mode of the thermal management system based on a temperature signal of the coolant obtained by using the temperature sensor.

According to a second aspect, an integrated thermal management system is provided. The integrated thermal management system includes a coolant system, a refrigerant system, a thermal management loop of a passenger compartment, a thermal management loop of a battery, and a thermal management loop of an electric drive system. The coolant system is configured to control heat exchange of the thermal management loop of the passenger compartment, the thermal management loop of the battery, and the thermal management loop of the electric drive system through coolant circulation, and the refrigerant system is configured to control heat exchange of the thermal management loop of the passenger compartment through refrigerant circulation. The coolant system includes the first substrate according to any one of the first aspect or the possible implementations of the first aspect, and the refrigerant system includes the second substrate according to any one of the first aspect or the possible implementations of the first aspect.

With reference to the second aspect, in some implementations of the second aspect, a working mode of the coolant system is controlled by using a control valve disposed on a first side of the first substrate. The working mode includes: a first mode, where in the first mode, one loop of the thermal management loop of the passenger compartment, the thermal management loop of the battery, and the thermal management loop of the electric drive system operates independently; and a second mode, where in the second mode, at least two loops of the thermal management loop of the passenger compartment, the thermal management loop of the battery, and the thermal management loop of the electric drive system operate in parallel.

In some possible implementations, the first mode to a third mode include a plurality of sub-modes. The sub-modes of the first mode include but are not limited to a heating mode of the thermal management loop of the passenger compartment, a heat dissipation mode of the thermal management loop of the passenger compartment, a heating mode of the thermal management loop of the battery, a cooling mode of the thermal management loop of the battery, a cooling mode of the thermal management loop of the electric drive system, and a heating mode of the thermal management loop of the electric drive system. For example, in the first mode, the control valve controls the first interface to communicate with the second interface, and controls the third interface and/or the fourth interface to be disabled and the fifth interface and/or the sixth interface to be disabled, to implement the heating mode or the heat dissipation mode of the thermal management loop of the passenger compartment, or the control valve controls the third interface to communicate with the fourth interface, and controls the first interface and/or the second interface to be disabled and the fifth interface and/or the sixth interface to be disabled, to implement the heating mode or the cooling mode of the thermal management loop of the battery, or the control valve controls the fifth interface to communicate with the sixth interface, and controls the first interface and/or the second interface to be disabled and the third interface and/or the fourth interface to be disabled, to implement the heating mode or the cooling mode of the thermal management loop of the electric drive system.

The sub-modes of the second mode include but are not limited to: The thermal management loop of the passenger compartment and the thermal management loop of the battery operate in parallel, for example, the thermal management loop of the passenger compartment performs heating, and the thermal management loop of the battery performs cooling; the thermal management loop of the passenger compartment and the thermal management loop of the electric drive system operate in parallel, for example, the thermal management loop of the passenger compartment performs heat dissipation, and the thermal management loop of the electric drive system performs heating; the thermal management loop of the battery and the thermal management loop of the electric drive system operate in parallel, for example, the thermal management loop of the battery performs heat dissipation, and the thermal management loop of the electric drive system performs cooling; and the thermal management loop of the passenger compartment, the thermal management loop of the electric drive system, and the thermal management loop of the battery operate in parallel, for example, the thermal management loop of the passenger compartment performs heat dissipation, the thermal management loop of the electric drive system performs heating, and the thermal management loop of the battery performs cooling. For example, in the second mode, the control valve controls the first interface to communicate with the second interface, controls the third interface to communicate with the fourth interface, and controls the fifth interface and/or the sixth interface to be disabled, so that the thermal management loop of the passenger compartment and the thermal management loop of the battery operate in parallel. In some possible implementations, when two or more thermal management loops operate in parallel, coolant between the two or more thermal management loops may exchange heat by using the first substrate.

With reference to the second aspect, in some implementations of the second aspect, the integrated thermal management system further includes a control module, and the control module is configured to control the coolant system and/or the refrigerant system based on at least one of a temperature of an electric drive system, a temperature of the passenger compartment, and a temperature of a battery system.

The control module may be a thermal management drive control module (thermal drive unit, TDU).

In the foregoing technical solution, intelligent data of the integrated thermal management system is managed by using the TDU. This helps flexibly switch a thermal management mode based on a scenario.

According to a third aspect, a vehicle is provided, including the thermal management component according to any one of the first aspect or the possible implementations of the first aspect, or including the integrated thermal management system according to any one of the second aspect or the possible implementations of the second aspect.

### BRIEF DESCRIPTION OF DRAWINGS

FIG. 1 is an exploded diagram of a complete architecture of a thermal management system according to an embodiment of this application;
FIG. 2 is diagrams of integrated forms of a thermal management system and a component according to an embodiment of this application;
FIG. 3 is diagrams of a coolant substrate according to an embodiment of this application;
FIG. 4 is an exploded diagram of a complete architecture of a thermal management component according to an embodiment of this application;
FIG. 5 is a diagram of a structure of a thermal management system according to an embodiment of this application;
FIG. 6 is a diagram of a circulation process of water and a refrigerant in a thermal management system in a mode 1;
FIG. 7 is a diagram of a circulation process of water and a refrigerant in a thermal management system in a mode 2;
FIG. 8 is a diagram of a circulation process of water and a refrigerant in a thermal management system in a mode 3; and
FIG. 9 is a block diagram of a vehicle according to an embodiment of this application.

### DESCRIPTION OF EMBODIMENTS

The following describes technical solutions of this application in detail with reference to accompanying drawings.

A thermal management component and system provided in this application are applicable to a vehicle, and are also applicable to another complex thermal management scenario in which both cooling and heating requirements exist. For example, the thermal management system provided in this application may be used in an electric vehicle. Specifically, the electric vehicle is a transportation means driven by an electric driver. The electric vehicle may be a pure electric vehicle (pure electric vehicle/battery electric vehicle, pure EV/battery EV), a hybrid electric vehicle (hybrid electric vehicle, HEV), a range extended electric vehicle (range extended electric vehicle, REEV), a plug-in hybrid electric vehicle (plug-in hybrid electric vehicle, PHEV), a new energy vehicle (new energy vehicle, NEV), or the like.

The thermal management system in this application can heat or cool a managed object by using water. In some possible implementations, the managed object may be a passenger compartment, a battery, a control system, or the like. In this application, water is used to transfer thermal energy. In some possible implementations, the thermal management system in this application can further heat or cool the managed object by using water and a refrigerant (refrigerant). The refrigerant can transfer heat through evaporation and condensation. It should be understood that the water may alternatively be replaced with another coolant to transfer thermal energy. This is not specifically limited in embodiments of this application.

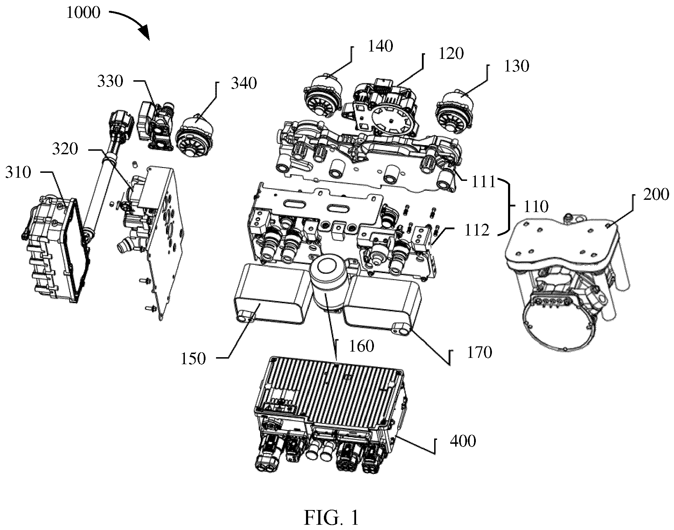

FIG. 1 is an exploded diagram of a complete architecture of a thermal management system according to an embodiment of this application. The thermal management system 1000 may include a central integrated module 100, a compressor (compressor) 200, an indirect-heating module 300, and a thermal management drive control module (thermal drive unit, TDU) 400.

Specifically, the central integrated module 100 may include an integrated substrate 110, a multi-way valve 120, a first water pump 130, a second water pump 140, a condenser 150, a liquid storage tank 160, and a battery chiller 170.

The integrated substrate 110 includes a coolant substrate 111 and a refrigerant substrate 112. More specifically, a coolant flow channel is disposed in the coolant substrate 111 to replace an existing water pipe, and a refrigerant channel is disposed in the refrigerant substrate 112 to replace an air conditioner pipe. The multi-way valve 120 is connected to the coolant substrate 111. By controlling a mode of the multi-way valve, a flow direction of coolant in the coolant substrate 111 is adjusted, to achieve a corresponding heat exchange objective. The first water pump 130 is a water pump of a battery loop, and is configured to: ensure coolant circulation and liquid amount stability of a thermal management loop of a battery, and ensure heat exchange efficiency of the system. The second water pump 140 is a water pump of an electric drive module loop, and is configured to: ensure coolant circulation and liquid amount stability of a thermal management loop of an electric drive module, and ensure heat exchange efficiency of the system. The electric drive module includes but is not limited to a high-voltage power distribution unit (power distribution unit, PDU), a motor control unit (motor control unit, MCU), and a motor (motor). The condenser 150 is configured to evaporate a refrigerant in a liquid state, so that the refrigerant changes from the liquid state to a gas state. It should be understood that heat in an environment needs to be absorbed in a process in which the refrigerant changes from the liquid state to the gas state. The liquid storage tank 160 is configured to store the refrigerant. The battery chiller 170 may be configured to cool the refrigerant, so that the refrigerant changes from the gas state to the liquid state. It should be understood that heat can be released to the environment in a process in which the refrigerant changes from the gas state to the liquid state.

In some possible implementations, the liquid storage tank 160 may alternatively be in another form. For example, the liquid storage tank 160 may be configured as a plate shape, so that the liquid storage tank 160 is mounted on the integrated substrate 110 in a stacking manner.

In some possible implementations, a chiller (chiller) and an evaporator are different apparatuses.

In some other possible implementations, the chiller and the evaporator may be a same apparatus. The apparatus is equivalent to the chiller in a heating process, and the apparatus is equivalent to the evaporator in a cooling process.

In the thermal management system of this application, functions of the chiller and the evaporator are implemented by the battery chiller 170. However, based on a concept of this application, a person skilled in the art may use two apparatuses to implement the functions of the chiller and the evaporator, and this solution should also fall within the protection scope of this application.

In the thermal management system 1000 shown in FIG. 1, in addition to corresponding interfaces disposed on sides that are of the condenser 150, the liquid storage tank 160, and the battery chiller 170 and that are connected to the integrated substrate 110, the other sides of the components are also provided with corresponding interfaces, which are a condenser inlet disposed on the condenser 150 and configured to connect to a compressor outlet, a battery chiller inlet disposed on the battery chiller 170 and configured to connect to a compressor inlet, and a liquid storage tank interface disposed on the liquid storage tank 160 and configured to connect to an HVAC.

The compressor 200 is a machine that compresses gas and increases gas pressure simultaneously. The compressor includes an input port and an output port. A refrigerant in a low-temperature gas state can enter the compressor from the input port. The compressor may compress the refrigerant in the gas state, so that the refrigerant changes from the low-temperature gas state to a high-temperature and high-pressure gas state. The compressed refrigerant is output from the output port.

The indirect-heating module 300 may include a positive temperature coefficient thermistor (positive temperature coefficient, PTC) 310, an indirect-heating module substrate 320, a three-way valve 330, and a third water pump 340. The indirect-heating module substrate 320 includes a water substrate. The water substrate is connected to the integrated substrate 110, and more specifically, is connected to the coolant substrate 111. The three-way valve 330 is connected to both the battery chiller 170 and the water substrate. The third water pump 340 is a water pump of a passenger compartment loop, and is configured to: ensure coolant circulation and liquid amount stability of a thermal management loop of a passenger compartment, and ensure heat exchange efficiency of the system.

In some possible implementations, another component in FIG. 1 may also be integrated into the central integrated module 100. For example, the water substrate in the indirect-heating module substrate 320 may be integrated into the integrated substrate 110. Further, the three-way valve 330 and the third water pump 340 may be integrated into the central integrated module 100; or one or more electronic expansion valves (electronic expansion valves, EXVs) may be integrated into the central integrated module 100. It should be understood that the electronic expansion valve is an apparatus that controls, by using an electrical signal generated by an adjusted parameter, a voltage or a current applied to the electronic expansion valve, to control a flow rate of the refrigerant. When the electronic expansion valve is enabled, the electronic expansion valve can perform throttling and reduce pressure.

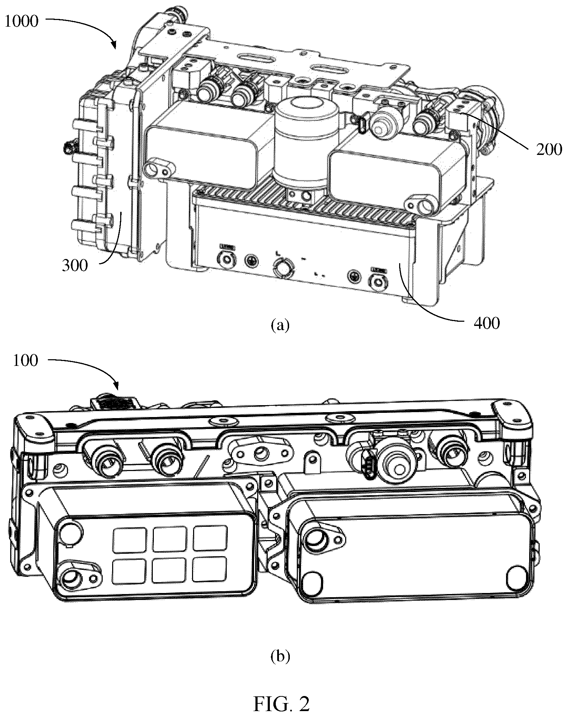

An integrated form of the exploded diagram of the thermal management system 1000 shown in FIG. 1 is shown in (a) in FIG. 2 (the compressor 200 is not shown). In some possible implementations, the thermal management system 1000 may alternatively not include the indirect-heating module 300 and the TDU 400, but include only the central integrated module 100 in (b) in FIG. 2. In some possible implementations, the thermal management system 100 may alternatively be split into four modules, and the four modules are flexibly and separately arranged. For example, for a front compartment with difficulty in arrangement, the central integrated module 100, the indirect-heating module 200, the compressor 200, and the TDU 400 may be respectively arranged in different positions. It should be further noted that a compressor and a TDU that have been mass produced may be selected as the compressor 200 and the TDU 400.

According to the thermal management system provided in this embodiment of this application, the coolant substrate is used to replace a water pipe, so that design complexity of a water path is simplified, a space volume occupied by a water channel layout is reduced, and waste of residual heat caused by a redundant pipe can also be reduced. The coolant substrate and the refrigerant substrate are arranged in an integrated manner, so that utilization of heat dissipation space of a plate heat exchanger can be improved, and space occupied by the thermal management system can be effectively reduced. In addition, the thermal management system provided in this application supports flexible arrangement of the modules. When a component in a module fails, only the module in which the component is located needs to be maintained or replaced. This helps reduce maintenance or replacement costs of a thermal management component.

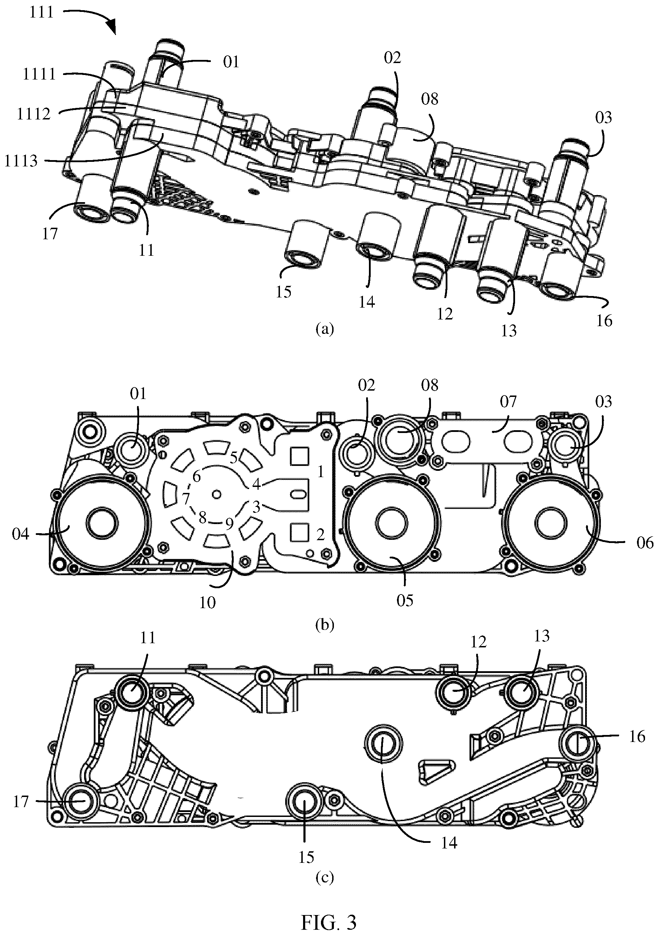

The following describes a structure of the coolant substrate 111 and connection relationships between the coolant substrate 111 and each thermal management component and between the coolant substrate 111 and each module with reference to FIG. 3. It should be noted that the structure of the coolant substrate 111 shown in FIG. 3 is merely an example for description. A person skilled in the art may change a position of an interface and a connection relationship at the interface based on a concept of this application. This solution should also fall within the protection scope of this application.

FIG. 3 is diagrams of a structure of a coolant substrate used in a thermal management system according to an embodiment of this application. (a) in FIG. 3 is a diagram of a three-dimensional structure of the coolant substrate 111. (b) in FIG. 3 is a plan view of a side that is of the coolant substrate 111 and that is configured to mount components such as a water pump. (c) in FIG. 3 is a plan view of a side that is of the coolant substrate 111 and that is in contact with the refrigerant substrate 112. It can be learned from (a) in FIG. 3 that the coolant substrate 111 includes a first sub-substrate 1111, a third sub-substrate 1112, and a second sub-substrate 1113. A first side of the first sub-substrate 1111 is configured to mount components such as a water pump. A first side of the second sub-substrate 1113 is in contact with the refrigerant substrate 112. The third sub-substrate 1112 is a substrate disposed between the first sub-substrate 1111 and the second sub-substrate 1113. More specifically, a plurality of coolant flow channels are disposed on a second side of the first sub-substrate 1111, and communicate with some interfaces of the multi-way valve 120. A plurality of coolant flow channels are also disposed on a second side of the second sub-substrate 1113, and communicate with the remaining interfaces of the multi-way valve 120. A first side and a second side of the third sub-substrate are respectively provided with coolant flow channels matching the second side of the first sub-substrate 1111 and the second side of the second sub-substrate 1113, so that when the three sub-substrates are connected in a sealed manner, two layers of coolant flow channels can be formed.

In this embodiment of this application, the multi-way valve 120 is controlled to control whether the coolant flow channels communicate with each other, to control a heat exchange status of the thermal management system. In some possible implementations, the multi-way valve 120 is a nine-way valve. In this case, at least nine coolant flow channels are included between the three layers of substrates, and respectively communicate with nine sub-interfaces of the nine-way valve.

It can be learned from (b) in FIG. 3 and (c) in FIG. 3 that the coolant substrate 111 may include interfaces 01 to 17. For example, the interfaces 01 to 10 are disposed on the side that is of the coolant substrate 111 and that is configured to mount components such as the water pump. The interface 01 and an interface 02 are separately connected to the battery loop. An interface 03 is connected to the PTC. In addition, an interface 07 is connected to the three-way valve, two ports of the three-way valve are respectively connected to two interfaces on the interface 07, and a remaining port is connected to a plate heat exchanger (heat exchanger, HEX) of the HVAC, so that the PTC, the HEX, and the coolant substrate form the thermal management loop of the passenger compartment. Interfaces 04 to 06 are water pump interfaces, and are respectively configured to connect to the second water pump 140, the first water pump 130, and the third water pump 340 in FIG. 1. In addition, the interface 01 communicates with the interface 04, the interface 02 communicates with an interface 05, and the interface 03 communicates with the interface 06. An interface 08 is configured to connect to a one-way valve. The interface 10 is configured to connect to the multi-way valve 120. The interface 10 includes sub-interfaces 1 to 9. The interfaces 11 to 17 are disposed on the side that is of the coolant substrate 111 and that is in contact with the refrigerant substrate 112. The interface 11 is connected to an expansion tank and the electric drive module by using the three-way valve, and the expansion tank is configured to fill or compensate coolant for the thermal management system. An interface 12 is configured to: bypass a radiator of a front-end module and be directly connected to another interface of the electric drive module. An interface 13 is configured to connect to the radiator of the front-end module. An interface 14 and an interface 16 are connected to the condenser. An interface 15 and the interface 17 are connected to the chiller (chiller). It should be noted that the electric drive module, the radiator of the front-end module, and the interface 12 are connected by using the three-way valve. It should be further noted that the coolant substrate 111 is further provided with a plurality of fastener vias and fastener blind holes, to mount each water pump, the refrigerant substrate, and the like on the coolant substrate 111.

It should be further noted that the interface 01, the interface 02, the interface 03, the interface 07, the interface 11, the interface 12, the interface 13, the interface 15, and the interface 17 respectively communicate with the nine sub-interfaces of the interface 10 through the nine flow channels in the coolant substrate. For example, the interface 01 and the interface 02 respectively communicate with a sub-interface 4 and a sub-interface 7 of the interface 10 through two flow channels. The interface 03 and the interface 07 respectively communicate with the sub-interface 1 and a sub-interface 8 of the interface 10 through two flow channels. The interface 12 and the interface 13 respectively communicate with a sub-interface 5 and the sub-interface 9 of the interface 10 through two flow channels. The interface 13 communicates with the sub-interface 9 of the interface 10 through one flow channel. The interface 15 and the interface 17 respectively communicate with a sub-interface 3 and a sub-interface 6 of the interface 10 through two flow channels. In some possible implementations, the nine-way valve 120 may control connection and disconnection between any two of the sub-interfaces 1 to 9, to control connection and disconnection between the nine flow channels in the coolant substrate. In this way, coolant circulation between the thermal management components is controlled.

In some possible implementations, a water temperature sensor is further mounted on the coolant substrate 111, so that a control module can adjust a working mode of the thermal management system based on a temperature signal obtained by using the water temperature sensor. For example, the control module may be the TDU 400, or may be another thermal management control module. This is not specifically limited in this embodiment of this application.

The coolant substrate provided in this embodiment of this application can replace a water pipe, so that design complexity of a water path is simplified. Further, a layout of the coolant flow channel is constructed by using the three layers of substrates in the coolant substrate, so that integration of the coolant flow channel can be improved, a volume of the coolant substrate can be reduced, and space occupied by the thermal management system can be further reduced. In addition, the multi-way valve is used to control connection and disconnection between coolant flow channels, to flexibly manage and control thermal management of a battery, thermal management of a passenger compartment, and thermal management of an electric drive system.

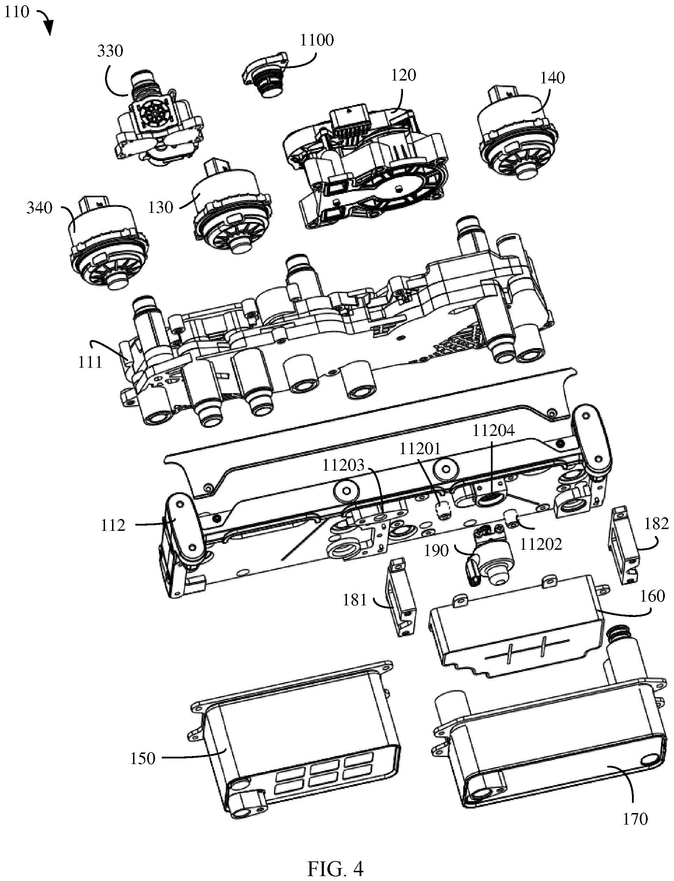

FIG. 4 is an exploded diagram of an architecture of a thermal management component according to an embodiment of this application. More specifically, the exploded diagram shown in FIG. 4 is an exploded diagram of the central integrated module 100 shown in (b) in FIG. 2. It can be seen from FIG. 4 that, in addition to the components shown in FIG. 1, the central integrated module 100 further includes an expansion valve 190, a one-way valve 1100, a three-way valve 330, a third water valve 340, and profile brackets 181 and 182. The expansion valve 190 performs throttling and reduces pressure. When high-pressure refrigerant liquid condensed by the condenser 150 passes through a throttle valve, pressure decreases because the refrigerant liquid is blocked. Consequently, a part of the refrigerant liquid is gasified, latent heat of gasification is absorbed, a temperature of the refrigerant liquid decreases accordingly, and the refrigerant liquid becomes low-temperature and low-pressure wet steam, and then enters the battery chiller 170. The expansion valve 190 can further control a flow rate of the refrigerant, to ensure that all that discharged from the evaporator is gaseous refrigerant. In some implementations, the expansion valve 190 may be an electronic expansion valve. In addition, the liquid storage tank 160 is also mounted in a stacking manner and disposed between the refrigerant substrate 112 and the battery chiller 170. Specifically, the liquid storage tank 160 is directly mounted on the refrigerant substrate 112, and the battery chiller 170 is mounted above the liquid storage tank 160 in a stacking manner by using the profile brackets 181 and 182. When a volume of the liquid storage tank 160 needs to be increased or decreased, only a height of the liquid storage tank 160 may be adjusted, so that heights of the profile brackets 181 and 182 mounted on two sides of the liquid storage tank 160 are adjusted, to control a gap between the battery chiller 170 and the liquid storage tank 160.

The refrigerant substrate 112 is provided with vias corresponding to the interfaces 11 to 17 of the coolant substrate 111, so that the interfaces 11 to 17 of the coolant substrate 111 can pass through the refrigerant substrate 112 and be connected to corresponding components and modules. In addition, a side that is of the refrigerant substrate 112 and that is configured to mount the condenser and the battery chiller is further provided with interfaces 11201 and 11202 that are connected to the battery chiller (a component for implementing the function of the evaporator). The refrigerant substrate 112 is further provided with an interface 11203 connected to the liquid storage tank 160 and an interface 11204 connected to the expansion valve 190. In addition, the refrigerant substrate 112 is further provided with a plurality of fastener vias and fastener blind holes, to facilitate assembling.

In addition to corresponding interfaces disposed on sides that are of the condenser 150 and the battery chiller 170 and that are connected to the integrated substrate 110, the other sides of the components are also provided with corresponding interfaces, which are the condenser inlet disposed on the condenser 150 and configured to connect to the compressor outlet, and a refrigerant outlet disposed on the battery chiller 170 and connected to the compressor inlet by using the three-way valve.

In some possible implementations, space for storing the refrigerant may alternatively be made on the refrigerant substrate 112 through forging, die casting, or the like, to expand a refrigerant storage capacity.

In some possible implementations, the refrigerant substrate 112 and the coolant substrate 111 are mounted in a stacking manner and in an equal area manner. It should be noted that the "equal area" means that areas of the refrigerant substrate 112 and the coolant substrate 111 in a direction in which the refrigerant substrate 112 is in contact with the coolant substrate 111 are approximately equal.

According to the thermal management component and system provided in embodiments of this application, the coolant substrate and the refrigerant substrate are mounted in a stacking manner, to integrate a coolant system and a refrigerant system. This improves volume utilization of the thermal management system and effectively reduces space occupied by the thermal management component (space of an entire vehicle occupied by a conventional thermal management component may reach about 100 L, and 55 L occupied space may be reduced by using the integrated thermal management system provided in this embodiment of this application). The liquid storage tank and the integrated substrate adopt a layered layout, to resolve a problem of insufficient plane space of an area of an integrated module. In addition, flexible adjustment can be implemented in a height direction of the liquid storage tank. By lifting or lowering of the profile brackets on the two sides, a space volume actually occupied by the central integrated module can be adjusted. Therefore, a demand for increasing the volume of the liquid storage tank is met. In addition, refrigerant storage space is directly made on a metal substrate body of the refrigerant substrate, so that a liquid storage expansion function can be implemented, and space utilization can be maximized.

In some possible implementations, the multi-way valve 120, the first water pump 130, and the second water pump 140 shown in FIG. 1 and FIG. 4 may alternatively be disposed between the coolant substrate 111 and the refrigerant substrate 112.

In some possible implementations, no refrigerant flow channel may be disposed inside the refrigerant substrate 112. In other words, the refrigerant substrate 112 mainly bears each thermal management component. It should be understood that a solution in which based on a concept of this application, a person skilled in the art changes the refrigerant substrate 112 to another substrate to be stacked with the coolant substrate 111 should also fall within the protection scope of this application.

Possible components and specific structures of the thermal management system are described above with reference to FIG. 1 to FIG. 4. The following describes, with reference to FIG. 1 and FIG. 4, an assembly manner of the thermal management system provided in this embodiment of this application.

For example, the thermal management system in FIG. 1 is used as an example, and an assembly sequence of the thermal management system may be as follows:
1. The liquid storage tank 160, the battery chiller 170, and the condenser 150 are sequentially secured to the refrigerant substrate 112 by using fasteners.
2. The coolant substrate 111 is secured to the refrigerant substrate 112 by using a fastener.
3. The multi-way valve 120, the one-way valve, the water temperature sensor, and the water pumps 130 and 140 are sequentially secured, by using fasteners, to a side that is of the coolant substrate 111 and that is exposed to the outside.
   So far, assembly of the central integrated module 100 is completed.
4. A sheet metal is mounted to a side surface of the central integrated module 100 by using a fastener.
5. The indirect-heating module 300 is mounted on the central integrated module 100 through the sheet metal and by using a fastener.
6. The compressor 200 and the TDU 400 are sequentially mounted on the central integrated module 100 by using fasteners.

The fastener may be a screw, a rivet, or another fastener. This is not specifically limited in this embodiment of this application.

An assembly sequence of the central integrated module 100 in the thermal management system shown in FIG. 4 may be as follows:
1. The expansion valve 190, the condenser 150, the liquid storage tank 160, and the profile brackets 181 and 182 are sequentially secured to the refrigerant substrate 112 by using fasteners.
2. The battery chiller 170 is secured to the profile bracket 181/182 by using a fastener.
3. The coolant substrate 111 is secured to the refrigerant substrate 112 by using a fastener.
4. The multi-way valve 120, the one-way valve 1100, the three-way valve 330, the water temperature sensor, and the water pumps 130, 140, and 340 are sequentially secured, by using fasteners, to the side that is of the coolant substrate 111 and that is exposed to the outside.

So far, assembly of the central integrated module 100 is completed. Further, the thermal management components such as the compressor, the PTC, and the TDU may be mounted and assembled on the central integrated module 100 in a building-block manner.

The foregoing assembly sequence is merely an example for description, and the assembly sequence of the components should not be construed as any limitation on this embodiment of this application. In some possible implementations, the assembly sequence of the components may be changed.

According to the thermal management system provided in this embodiment of this application, the coolant substrate and the refrigerant substrate are used to replace a water pipe and an air conditioner pipe, so that layout design difficulty of the water pipe and a refrigerant pipe is reduced, an assembly process is simplified, and assembly difficulty is reduced. A modular architecture is assembled in a building-block manner, so that assembly efficiency of the entire vehicle can be effectively improved.

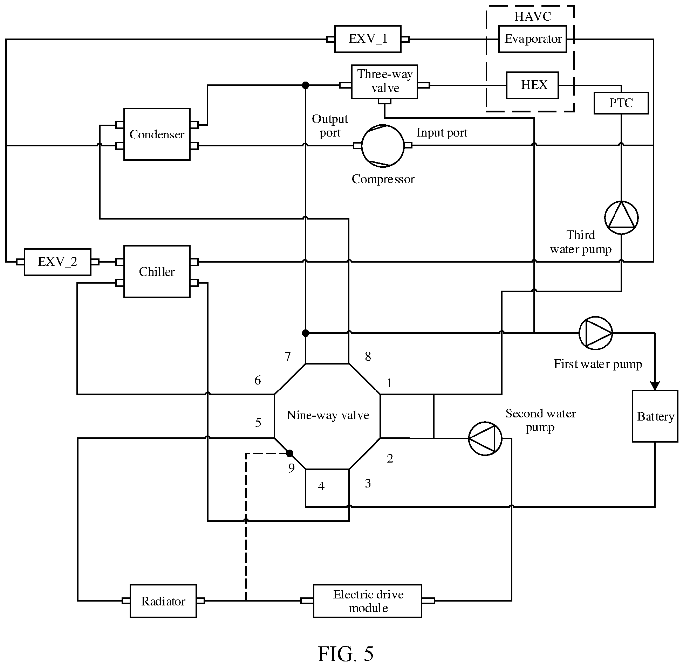

FIG. 5 shows a schematic structure of a thermal management system according to this application. The thermal management system may include a coolant circulation system and a refrigerant circulation system. As shown in FIG. 5, a connection relationship between the nine-way valve and each thermal management component is described by using an example in which the multi-way valve 120 in FIG. 1 is a nine-way valve. The nine-way valve includes interfaces 1 to 9. It should be understood that the nine-way valve is connected to the coolant substrate 111, and connection or disconnection between any two of the interfaces 1 to 9 of the nine-way valve is controlled, so that whether the coolant substrate communicates with each thermal management loop can be controlled. In the following descriptions, the "coolant substrate and nine-way valve" is simplified as the "nine-way valve". It should be understood that, that "an apparatus 1 is connected to the nine-way valve" indicates that "the apparatus 1 is connected to the coolant substrate by using the nine-way valve, and an interface of the nine-way valve is enabled or disabled, to control whether the apparatus 1 communicates with the coolant substrate". Specifically, the compressor, the condenser, a first electronic expansion valve (EXV_1), and the evaporator are sequentially connected to form a cooling loop of a passenger compartment. In a working condition of performing cooling in the passenger compartment alone, the cooling loop of the passenger compartment is started. The compressor, the condenser, the nine-way valve, a second electronic expansion valve (EXV_2), and the chiller are sequentially connected to form a heating loop of a heat pump of the passenger compartment. In a working condition of performing heating by using the heat pump of the passenger compartment alone, the heating loop of the heat pump of the passenger compartment is started. The condenser, the nine-way valve, the third water pump, the PTC, the plate heat exchanger (heat exchanger, HEX), and the three-way valve are sequentially connected to form a heating loop of the PTC of the passenger compartment. In a working condition of performing heating by using the PTC of the passenger compartment alone, the heating loop of the PTC of the passenger compartment is started. The battery, the first water pump, and the nine-way valve are sequentially connected to form a heating loop of the battery. The battery, the first water pump, the nine-way valve, and the chiller are sequentially connected to form a first heat exchange loop of the battery. The battery, the first water pump, the nine-way valve, the chiller, and the condenser are sequentially connected to form a second heat exchange loop of the battery. The second water pump, the electric drive module, and the nine-way valve are sequentially connected to form an electric drive heat exchange loop. It should be noted that functions of the chiller and the evaporator may be implemented by the battery chiller 170 described above.

It should be further noted that the thermal management system provided in this embodiment of this application may include a TDU, configured to receive an instruction. The instruction indicates a working mode of the thermal management system. In some possible implementations, another control unit may alternatively be used to receive an instruction, to control the working mode of the thermal management system. This is not specifically limited in this embodiment of this application. For example, the TDU controls the foregoing apparatus according to the received instruction, so that the thermal management system provided in this application can support at least 20 modes. For example, the TDU may obtain a first instruction, and the first instruction instructs the thermal management system to work in a mode 1. For another example, the TDU may obtain a second instruction, and the second instruction instructs the thermal management system to work in a mode 2. Further, by controlling switching of pipes of the nine-way valve and enabling/disabling statuses of interfaces of the one-way valve and the three-way valve, thermal management control can be implemented for thermal management of the battery, thermal management of an air conditioner of the passenger compartment, and electric drive thermal management in more than 20 scenarios.

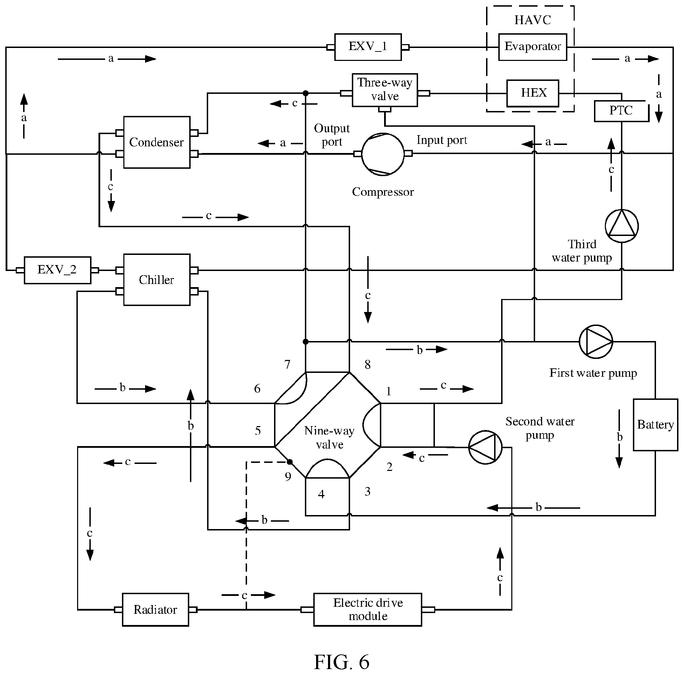

For example, the following separately describes several thermal management modes with reference to FIG. 6 to FIG. 8.

Mode 1: The passenger compartment loop performs cooling, the battery loop performs heat dissipation, and the electric drive module loop dissipates heat.

In the mode 1, an interface 1 and an interface 2, an interface 3 and an interface 4, an interface 6 and an interface 7, and an interface 5 and an interface 8 of the nine-way valve are controlled to separately communicate with each other.

The following apparatuses are controlled to be in an enabled state. The EXV_1, the EVAP, and two interfaces that are of the three-way valve and that are connected to the condenser and the HEX are controlled to be enabled.

The following apparatuses are controlled to be in a disabled state. An air door at the condenser is controlled to be disabled, so that the condenser does not perform heat exchange, that is, in this case, the condenser only performs conduction. The EXV_2 is controlled to be in a disabled state, that is, in this case, the chiller only performs conduction. The PTC is controlled not to perform heating and only perform conduction. In this way, each module works in a water path operation manner shown in FIG. 6. A loop a is a cooling loop of a passenger compartment, a loop b is a heat dissipation loop of the battery, and a loop c is a heat dissipation loop of an electric drive module. Water circulates in both the loop b and the loop c, and a refrigerant circulates in the loop a.

Mode 2: The heat pump of the passenger compartment loop performs heating, the battery loop performs heating, and the electric drive module loop dissipates heat.

In the mode 2, the interface 2 and the interface 3, the interface 5 and the interface 6, the interface 4 and the interface 7, and the interface 1 and the interface 8 of the nine-way valve are controlled to separately communicate with each other.

The following apparatuses are controlled to be in an enabled state. The EXV_2 and the radiator are controlled to be enabled.

The air door at the condenser is controlled to be enabled, so that the condenser performs heat exchange, that is, the condenser performs condensation in the mode 1.

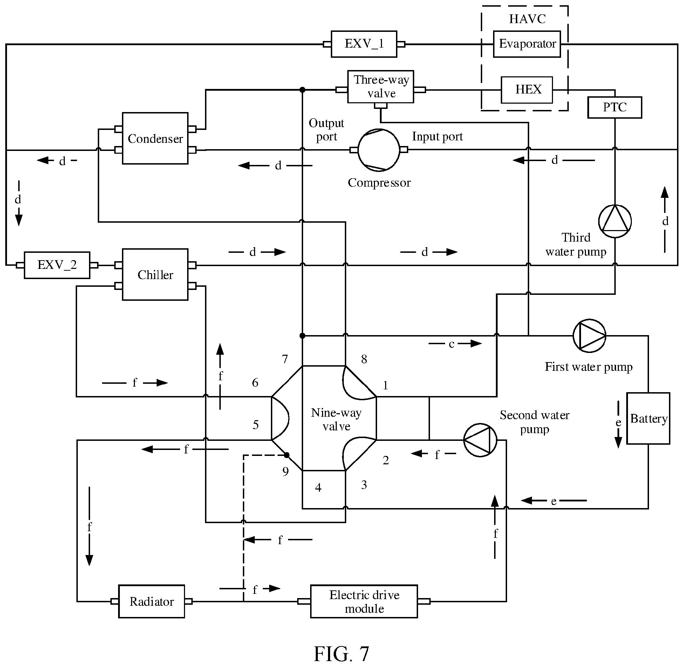

The following apparatuses are controlled to be in a disabled state. The EXV_1 and the EVAP are controlled to be in a disabled state, and a heating function of the PCT is controlled to be disabled. In this way, each module works in a water path operation manner shown in FIG. 7. A loop d is the heating loop of the heat pump of the passenger compartment, a loop e is the heating loop of the battery, and a loop f is the heat dissipation loop of an electric drive module. Water circulates in both the loop e and the loop f, and a refrigerant circulates in the loop d.

Mode 3: The PTC of the passenger compartment loop performs heating, the battery loop performs heating, and the electric drive module loop dissipates heat.

In the mode 3, the interface 2 and the interface 3, the interface 5 and the interface 6, the interface 4 and the interface 7, and the interface 1 and the interface 8 of the nine-way valve are controlled to separately communicate with each other.

The following apparatuses are controlled to be in an enabled state. The PTC is controlled to be enabled, and three interfaces of the three-way valve are controlled to be conducted.

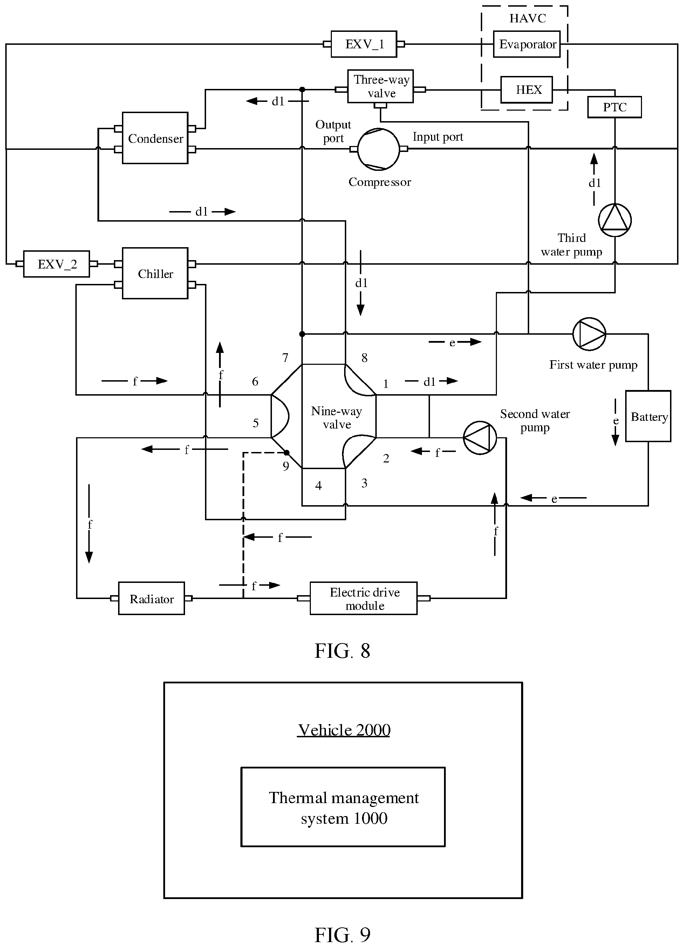

The following apparatuses are controlled to be in a disabled state. The air door at the condenser is controlled to be disabled, so that the condenser does not perform heat exchange, that is, in this case, the condenser only performs conduction. The EXV_1 and the EXV_2 are controlled to be in a disabled state, that is, in this case, the chiller only performs conduction. In this way, each module works in a water path operation manner shown in FIG. 8. A loop d1 is the heating loop of the PTC of the passenger compartment, a loop e is the heating loop of the battery, and a loop f is the heat dissipation loop of an electric drive module. Water circulates in the loop d1, the loop e, and the loop f.

It should be understood that, by controlling enabling/disabling statuses of different interfaces of the one-way valve, the three-way valve, and the nine-way valve, a working condition of performing cooling or heating by using the passenger compartment loop alone, a working condition of performing heating, cooling, or heat dissipation by using the battery loop alone, and a working condition of performing heating or heat dissipation by using the electric drive module loop alone can be implemented. In addition, a combination of modes other than the foregoing modes 1 to 3 can be further implemented.

According to the thermal management system provided in this embodiment of this application, in a combined control manner of the nine-way valve, the three-way valve, and the one-way valve, more than 20 thermal management modes can be implemented for an entire vehicle through a plurality of coolant flow channels in limited coolant flow channel space.

An embodiment of this application further provides a vehicle. As shown in FIG. 9, the vehicle 2000 may include the thermal management system 1000 shown in FIG. 1 or (a) in FIG. 2, or may include the central integrated module 100 shown in (b) in FIG. 2 or FIG. 4, or may include the coolant substrate 111 shown in FIG. 3.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division, and there may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between apparatuses or units may be implemented in electrical, mechanical, or other forms.

The units described as separate parts may or may not be physically separate, and parts displayed as units may or may not be physical units, that is, may be located at one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions in this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A thermal management component, comprising a first substrate (111) and a second substrate (112), wherein
the first substrate (111) is provided with at least seven interfaces, the first substrate (111) is provided with at least seven flow channels, the at least seven flow channels communicate with the at least seven interfaces, the first substrate (111) is provided with a control valve, and the control valve is configured to control communication between the at least seven flow channels to control communication between the at least seven interfaces; and
the second substrate (112) is disposed on a first side of the first substrate (111), the second substrate (112) is provided with through holes corresponding to the interfaces disposed on the first side of the first substrate (111), and the interfaces disposed on the first side of the first substrate (111) respectively pass through the corresponding through holes.

2. The thermal management component according to claim 1, wherein the at least seven interfaces comprise a first interface to a seventh interface, the first interface and the second interface are configured to connect to a thermal management loop of a passenger compartment, the third interface and the fourth interface are configured to connect to a thermal management loop of a battery, the fifth interface and the sixth interface are configured to connect to a thermal management loop of an electric drive system, the seventh interface is configured to connect to a coolant tank, the coolant tank is configured to fill or compensate coolant for a thermal management system, and the thermal management system comprises the thermal management loop of the passenger compartment, the thermal management loop of the battery, and the thermal management loop of the electric drive system.

3. The thermal management component according to claim 1 or 2, wherein the interfaces disposed on the first side of the first substrate (111) comprise an eighth interface and a ninth interface, the eighth interface and the ninth interface respectively pass through corresponding through holes to be connected to a first thermal management device, and the first thermal management device is one of a condenser (150) and a battery chiller (170).

4. The thermal management component according to claim 3, wherein the interfaces disposed on the first side of the first substrate (111) further comprise a tenth interface and an eleventh interface, the tenth interface and the eleventh interface respectively pass through corresponding through holes to be connected to a second thermal management device, and the second thermal management device is a device other than the first thermal management device in the condenser (150) and the battery chiller (170).

5. The thermal management component according to any one of claims 1 to 4, wherein a cavity for storing a refrigerant is provided inside the second substrate (112).

6. The thermal management component according to any one of claims 1 to 5, wherein a first side of the second substrate (112) is provided with a refrigerant container interface, the refrigerant container interface is configured to connect to a refrigerant container (160), the refrigerant container (160) is stacked on the first side of the second substrate (112), and the first side of the second substrate (112) is a side away from the first substrate (111).

7. The thermal management component according to claim 6, wherein the thermal management component further comprises:
a first profile bracket (181) and a second profile bracket (182), configured to mount the first thermal management device or the second thermal management device above the refrigerant container (160) in a stacking manner.

8. The thermal management component according to any one of claims 1 to 7, wherein the control valve is disposed on a second side of the first substrate (111), and the second side of the first substrate (111) is a side away from the second substrate (112).

9. The thermal management component according to any one of claims 1 to 8, wherein the second side of the first substrate (111) is provided with one or more water pump interfaces, the one or more water pump interfaces are configured to mount a water pump, and the water pump is configured to control circulation of coolant in the thermal management system.

10. The thermal management component according to any one of claims 1 to 9, wherein the first substrate (111) comprises:
a first sub-substrate (1111), a second sub-substrate (1113), and a third sub-substrate (1112), wherein the third sub-substrate (1112) is disposed between the first sub-substrate (1111) and the second sub-substrate (1113); and
an inner side of the first sub-substrate (1111) is provided with N half-flow channels, an inner side of the second sub-substrate (1113) is provided with M half-flow channels, one side of the third sub-substrate (1112) is provided with N half-flow channels corresponding to the inner side of the first sub-substrate (1111), and the other side of the third sub-substrate (1112) is provided with M half-flow channels corresponding to the inner side of the second sub-substrate (1113), to form the at least seven flow channels, wherein M and N are positive integers greater than or equal to 1.

11. The thermal management component according to any one of claims 1 to 10, wherein the first substrate (111) is a coolant substrate, and the at least seven flow channels are configured for circulation of the coolant; and
the second substrate (112) is a refrigerant substrate, and a flow channel configured for circulation of the refrigerant is disposed inside the refrigerant substrate.

12. An integrated thermal management system, comprising:
a coolant system, a refrigerant system, a thermal management loop of a passenger compartment, a thermal management loop of a battery, and a thermal management loop of an electric drive system, wherein the coolant system is configured to control heat exchange of the thermal management loop of the passenger compartment, the thermal management loop of the battery, and the thermal management loop of the electric drive system through coolant circulation, and the refrigerant system is configured to control heat exchange of the thermal management loop of the passenger compartment through refrigerant circulation; and
the coolant system comprises the first substrate (111) according to any one of claims 1 to 11, and the refrigerant system comprises the second substrate (112) according to any one of claims 1 to 11.

13. The integrated thermal management system according to claim 12, wherein a working mode of the coolant system is controlled by using the control valve disposed on the first side of the first substrate (111), and the working mode comprises:
a first mode, wherein in the first mode, one loop of the thermal management loop of the passenger compartment, the thermal management loop of the battery, and the thermal management loop of the electric drive system operates independently; and
a second mode, wherein in the second mode, at least two loops of the thermal management loop of the passenger compartment, the thermal management loop of the battery, and the thermal management loop of the electric drive system operate in parallel.

14. The integrated thermal management system according to claim 12 or 13, wherein the integrated thermal management system further comprises a control module (400), and the control module (400) is configured to control the coolant system and/or the refrigerant system based on at least one of a temperature of the electric drive system, a temperature of the passenger compartment, and a temperature of a battery system.

15. A vehicle, comprising the thermal management component according to any one of claims 1 to 11, or the integrated thermal management system according to any one of claims 12 to 14.
